# FASCICULE DE BREVET EUROPEEN

(11) **EP 0 834 425 B1**
(45) Date de publication et mention de la délivrance du brevet: **05.12.2001**
(21) Numéro de dépôt: 97402253.5
(22) Date de dépôt: 26.09.1997
(51) Int. Cl.: B60R 11/02, F16M 13/02, F16M 11/10

(54) **Agencement d'un support de fixation dans lequel est installé un appareil, tel qu'un lecteur audionumérique, et véhicule automobile équipé de cet agencement**
Halter zum Befestigen eines Gerätes, wie eines digitalen Audiocassetten-Wiedergabegerätes, und dessen Anordnung in einem Kraftfahrzeug
Cradle for securing an apparatus, such as a digital audio equipment, and an arrangement thereof in a vehicle

(30) Priorité: 01.10.1996 FR 9611947
(43) Date de publication de la demande: 08.04.1998
(73) Titulaire: AUTOMOBILES PEUGEOT, 75116 Paris (FR); AUTOMOBILES CITROEN, 92200 Neuilly-sur-Seine (FR)
(72) Inventeur: Charton, René, 78990 Elancourt (FR)
(74) Mandataire: Thinat, Michel

(56) Documents cités:
- DE-C- 4 109 374
- FR-A- 1 577 298
- US-A- 4 094 485
- US-A- 5 139 223

## Description

La présente invention concerne un agencement d'un support de fixation dans lequel est installé de manière extractible ou non un appareil, tel qu'un lecteur portatif de disque compact, et un véhicule automobile équipé de cet agencement.

Un agencement d'un support de fixation ayant les charactéristiques du préambule de la revendication 1 est décrit dans le document DE-A-4 109 374.

De nombreux véhicules automobiles sont déjà équipés d'agencements de supports de fixation dans lesquels sont installés des appareils portatifs extractibles ou non, tels que des autoradios ou des lecteurs audionumériques. Toutefois, ces agencements augmentent généralement l'encombrement de la planche de bord et leur manipulation est relativement inconfortable pour l'utilisateur.

La présente invention a donc pour but d'éliminer les inconvénients précités et de proposer un nouvel agencement d'un support de fixation pour un appareil, qui permet à l'utilisateur d'installer et d'extraire rapidement et facilement l'appareil de son support.

A cet effet, l'invention a pour objet un agencement d'un support de fixation dans lequel est destiné à être installé un appareil, tel qu'un lecteur portatif audionumérique, caractérisé en ce que ledit support présente des fentes ou logements servant de rampes de guidage pour des pattes en saillie de l'appareil qui s'engagent dans lesdites fentes ou logements lors de l'installation de l'appareil dans le support, lesdites fentes ou logements présentant des crans correspondant aux différentes positions possibles pour l'appareil.

En particulier, le support peut comporter deux ailes latérales opposées entre lesquelles l'appareil s'engage et dans lesquelles est prévue au moins une fente supérieure.

Pour que l'appareil soit extractible, chaque fente ou logement est prévu avec une partie débouchant vers l'extérieur par laquelle les pattes s'engagent dans le support.

Dans un mode de réalisation particulier, les crans sont agencés dans les fentes ou logements de façon que l'appareil puisse prendre sur le support une position stable inclinée vers l'avant et une position stable verticale au fond du support. Dans ce cas, on peut prévoir que chaque aile du support comporte une fente supérieure sensiblement linéaire ou en arc de cercle ayant deux crans en forme d'escalier descendant correspondant aux deux positions précitées. Chaque aile peut comporter en outre une fente inférieure ayant un cran unique de dimension suffisante pour permettre le déplacement de la patte correspondante de l'appareil entre les deux positions précitées.

Dans une variante de réalisation, l'appareil est muni sur ses parois d'une patte supérieure et d'une patte inférieure perpendiculaires au plan des fentes ou logements du support. On peut prévoir que la patte supérieure s'étend parallèlement à la direction générale de la fente supérieure et que la patte inférieure s'étend perpendiculairement à cette direction.

A la place des fentes inférieures, le support peut comporter à sa base deux logements espacés en forme générale de V définissant un cran unique de dimension suffisante pour permettre le déplacement de la patte correspondante de l'appareil entre les deux positions précitées.

Les pattes précitées sont prévues en saillie des parois latérales de l'appareil ou en variante, les pattes inférieures sont prévues en saillie sous la base de l'appareil.

Selon une autre caractéristique de l'invention, le support est muni d'un moyen pour solliciter les pattes dans les différents crans suivant la position de l'appareil dans le support. Ce moyen est par exemple un ressort interposé sur le trajet de la patte supérieure dans la fente supérieure. En particulier, ce ressort peut être un ressort filiforme qui est maintenu sur le support par des pattes élastiques découpées dans celui-ci.

L'invention vise également un véhicule automobile équipé de l'agencement précité, en particulier dans son coffre. Dans ce dernier cas, l'agencement précité est installé au niveau d'un passage de roue arrière, dans une partie creuse du garnissage interne du coffre.

Dans un premier mode de réalisation, l'agencement comporte un deuxième support fixé sur une tôle du véhicule derrière le garnissage, le premier support venant se fixer sur le second support en venant pincer le garnissage entre eux. En variante, l'agencement de l'invention peut comporter en outre une entretoise qui vient s'intercaler entre le garnissage et le premier support.

L'invention sera mieux comprise, et d'autres buts, détails, caractéristiques et avantages de celle-ci apparaîtront plus clairement au cours de la description explicative qui va suivre de deux modes de réalisation particuliers actuellement préférés de l'invention, donnés uniquement à titre illustratif et non limitatif, en référence aux dessins schématiques annexés, dans lesquels :

Les figures 1, 3, 5, 7 et 9 sont des vues en perspective des différentes positions possibles pour l'agencement d'un appareil et d'un support de fixation selon l'invention, en passant par une position extraite de l'appareil, une position intermédiaire inclinée dans le support et une position verticale complètement engagée dans celui-ci.

Les figures 2, 4, 6, 8 et 10 sont des vues latérales et partielles respectivement des figures 1, 3, 5, 7 et 9, représentant progressivement l'engagement des pattes dans les fentes correspondantes.

La figure 11 est une vue schématique et en perspective du montage de l'agencement de l'invention au niveau d'un passage de roue arrière dans le coffre d'un véhicule automobile.

La figure 12 est une vue en perspective d'un autre mode de réalisation de l'agencement de l'invention, dans une position verticale de l'appareil complétement engagé dans le support.

La figure 13 est une vue latérale et partielle de la figure 12.

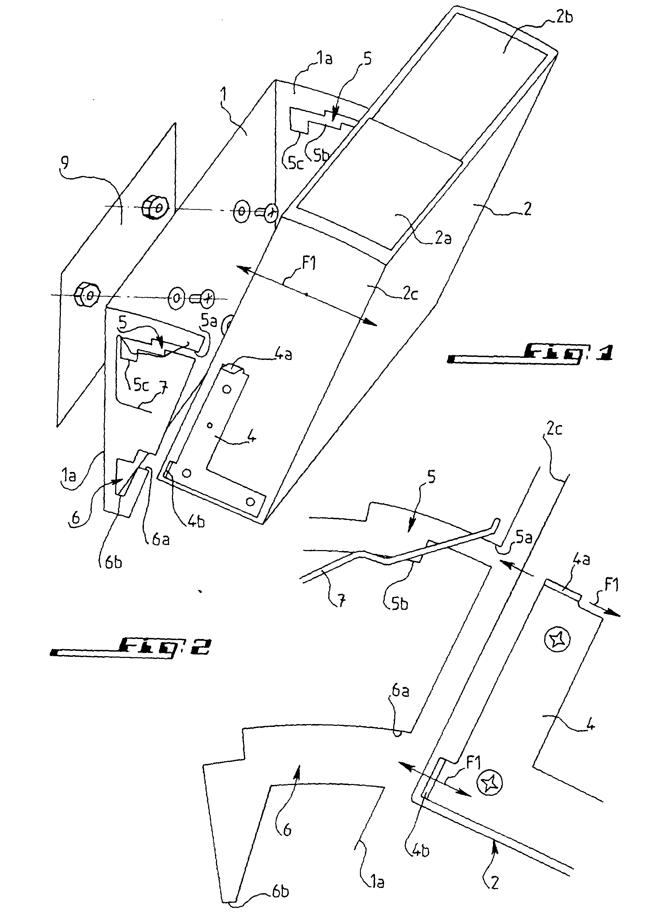

Selon l'exemple de réalisation représenté sur les figures 1 à 10, l'agencement de l'invention est constitué d'un support de fixation 1 dans lequel vient s'engager un appareil 2.

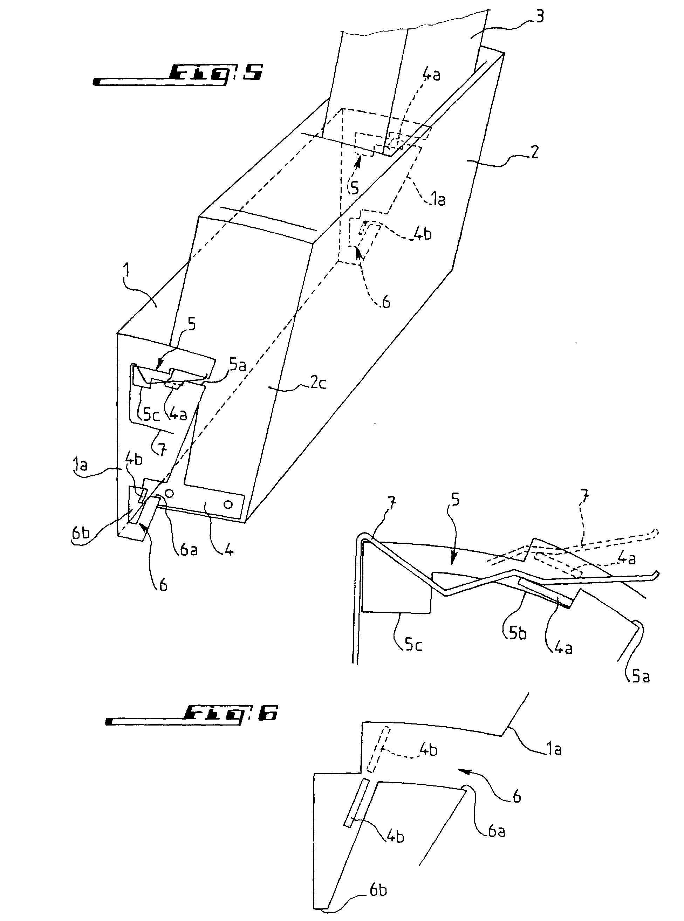

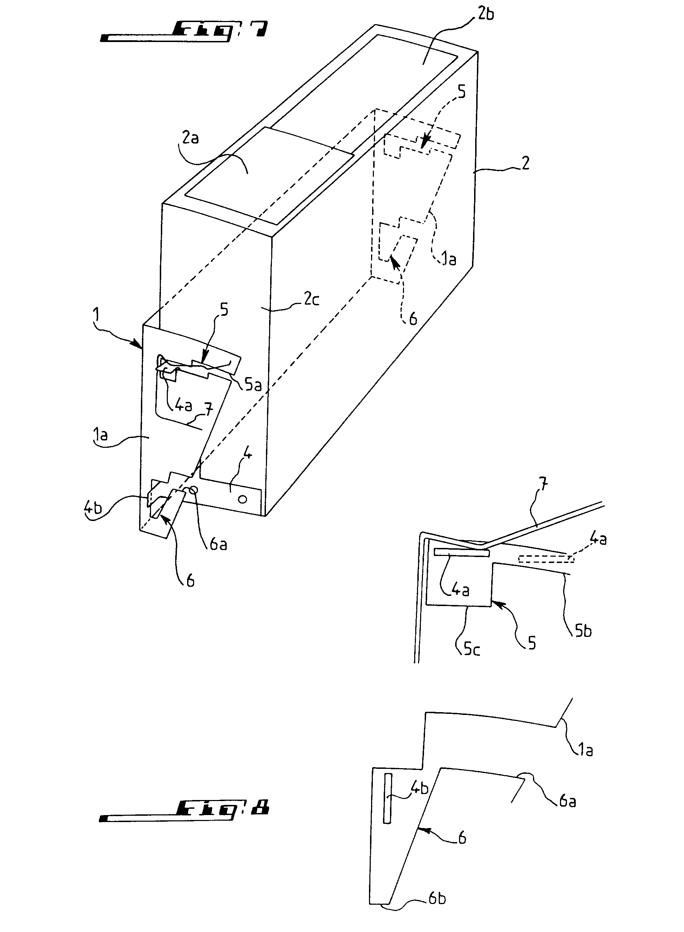

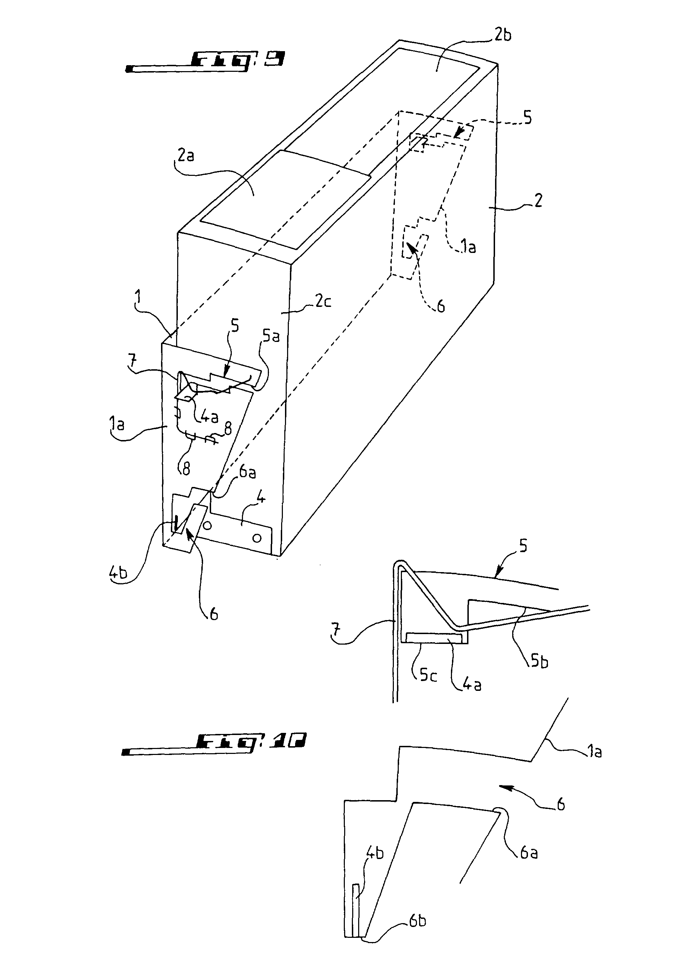

L'appareil 2 est constitué ici d'un lecteur audionumérique pour disque compact ou plus précisément pour un porte-CD 3, comme mieux représenté sur la figure 5. Sur sa façade supérieure, le lecteur 2 comporte un volet 2a qui coulisse pour permettre l'introduction du porte-CD à travers une ouverture 2b dans le lecteur 2. Sur ses deux façades latérales opposées 2c, le lecteur 2 comporte une pièce mâle d'engagement 4 en forme d'équerre, comportant une patte supérieure 4a et une patte inférieure 4b faisant saillie perpendiculairement à ladite paroi latérale 2c. Les pattes 4a et 4b s'étendent dans des plans sensiblement perpendiculaires entre eux.

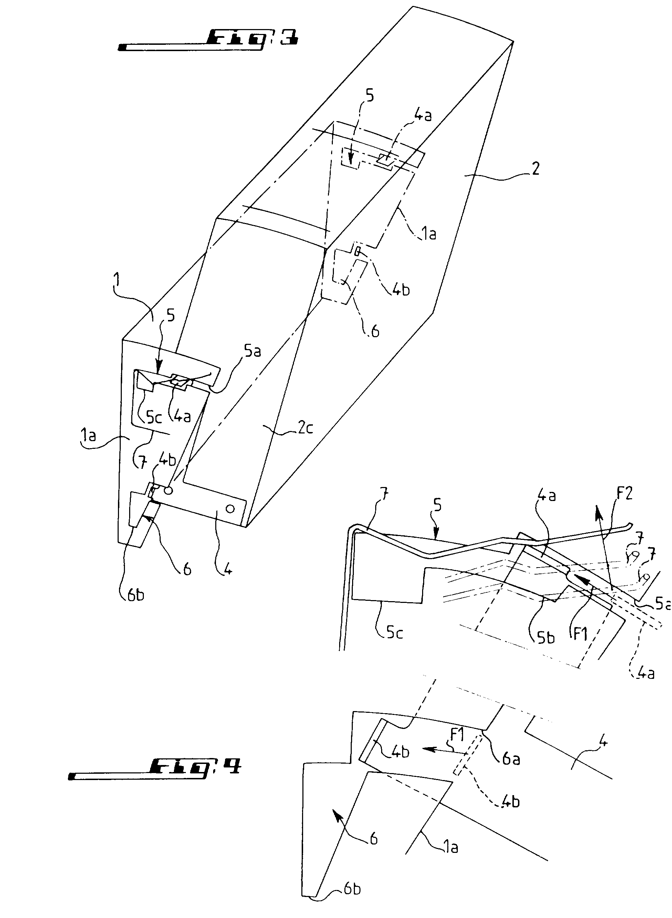

Le support de fixation 1 comporte une plaque de fond verticale dont les portions d'extrémité latérales opposées sont recourbées à angle droit en forme d'aile la, chaque aile la comportant une fente supérieure 5 sensiblement linéaire ou en arc de cercle (voir figure 2) et une fente inférieure 6 également sensiblement en arc de cercle. La fente supérieure 5 débouche à une extrémité 5a vers l'extérieur pour permettre l'introduction de la patte supérieure 4a de l'appareil 2 et se prolonge en forme d'escalier descendant dans l'aile la avec deux marches formant deux crans 5b et 5c pour deux positions distinctes de l'appareil 2 dans le support de fixation 1. La fente inférieure 6 débouche également à une extrémité 6a vers l'extérieur pour permettre l'introduction de la patte inférieure 4b de l'appareil 2 et se prolonge dans l'aile la également sous la forme d'un escalier descendant, mais avec un seul cran 6b dont la dimension est suffisante pour permettre le déplacement de la patte 4b entre les deux positions précitées de l'appareil dans le support 1. Les fentes 5 et 6 servent toutes deux comme rampe de guidage pour l'introduction et le déplacement des pattes 4a et 4b de l'appareil 2 dans le support 1.

La patte supérieure 4a s'étend dans un plan parallèle à la direction de déplacement F1 de l'appareil et à la direction de la fente supérieure 5, alors que la patte inférieure 4b s'étend dans un plan sensiblement perpendiculaire à la direction de déplacement de l'appareil, de sorte que la fente inférieure 6 du support 1 présente une dimension verticale sensiblement supérieure à celle de la fente supérieure 5.

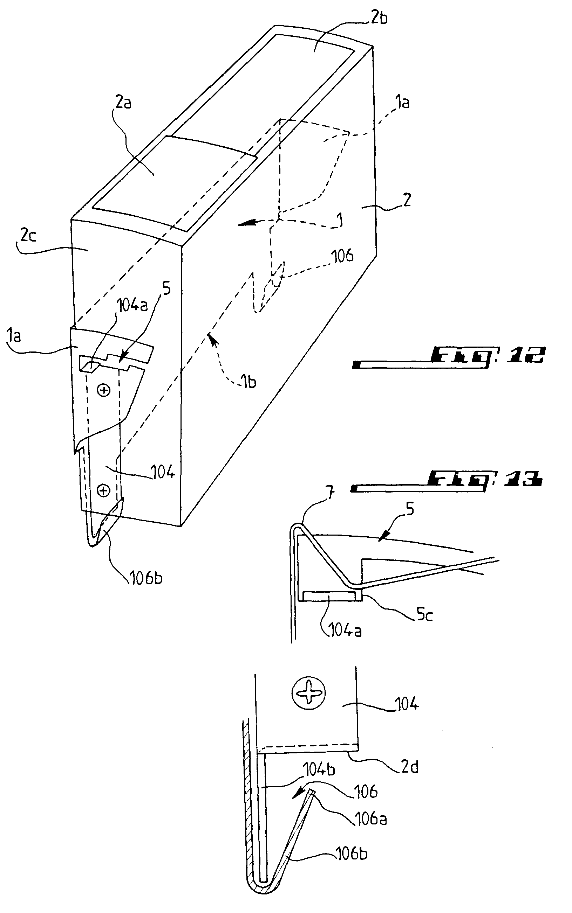

Le support de fixation 1 comporte en outre sur ses deux ailes latérales la un ressort filiforme 7 qui est maintenu sur le support par exemple par des pattes élastiques 8 découpées dans les ailes mêmes (voir figure 9). Le ressort 7 est associé uniquement à la fente supérieure 5 et s'étend le long du trajet de la fente 5 de manière à solliciter la patte supérieure 4a de l'appareil 2 vers le fond de chaque cran 5b et 5c respectivement. A cet effet, le ressort filiforme 7 présente une forme en zigzag dont l'extrémité libre est située au voisinage de l'extrémité débouchante 5a de la fente 5, de façon que la patte supérieure 4a passe entre ledit ressort 7 et le fond de la fente 5, le ressort 7 sollicitant ainsi la patte 4a vers le fond des crans 5b et 5c.

On voit également sur la figure 1 une deuxième plaque 9 qui sera utilisée pour fixer l'agencement de l'invention par exemple dans un véhicule automobile, comme mieux représenté sur la figure 11.

Il est particulièrement avantageux, comme représenté sur la figure 11, d'installer l'agencement de l'invention dans le coffre du véhicule, au lieu de l'installation traditionnelle sur la planche de bord, car ainsi l'encombrement de cette dernière est réduit. En particulier, l'agencement de l'invention est installé au niveau d'un passage de roue arrière où une tôle 10 sépare la roue du coffre. A cet endroit, il existe généralement une deuxième tôle 11 qui comporte une ouverture 11a ménageant un espace creux entre les deux tôles 10 et 11. Le garnissage par exemple plastique 12 qui recouvre généralement le fond du coffre comporte avantageusement à cet endroit un renfoncement 12a qui vient se loger à travers l'ouverture 11a dans l'espace creux précité. Ce renfoncement 12a est particulièrement adapté pour y loger l'agencement de l'invention. Ainsi, on voit sur la figure 11 que la deuxième plaque de support 9 est fixée sur la tôle 10 et que la première plaque de support 1 est attachée à cette deuxième plaque 9 en venant pincer le garnissage 12 entre elles.

On peut également prévoir une entretoise 13 par exemple en forme générale de U qui vient s'intercaler entre le garnissage 12 et le support de fixation 1 pour écarter l'agencement de l'invention du garnissage 12.

Une trappe non représentée pourrait venir obturer le renfoncement 12a et ainsi protéger et cacher l'agencement de l'invention vis-à-vis du reste du coffre.

Lorsque l'agencement de l'invention est logé dans un tel renfoncement 12a, la façade 2a et 2b de l'appareil 2 pour l'introduction du porte-CD 3 n'est généralement pas accessible lorsque l'appareil est dans sa position stable verticale au fond du support de fixation 1, et il est alors nécessaire de basculer l'appareil 2 dans sa position inclinée dans le support 1 pour pouvoir retirer ou introduire un porte-CD dans l'appareil.

On va maintenant brièvement décrire le fonctionnement de l'agencement de l'invention en référence aux figures 1 à 10.

Dans la position représentée sur les figures 1 et 2, le lecteur audionumérique portatif 2 n'est pas encore engagé dans le support de fixation 1. Pour engager l'appareil 2 dans le support 1, on incline légèrement l'appareil de façon que la patte supérieure 4a et la patte inférieure 4b soient en face des extrémités débouchantes respectives 5a et 6a des fentes 5 et 6 et que les pattes 4a et 4b soient respectivement parallèle et perpendiculaire à la direction de déplacement F1 de l'appareil 2.

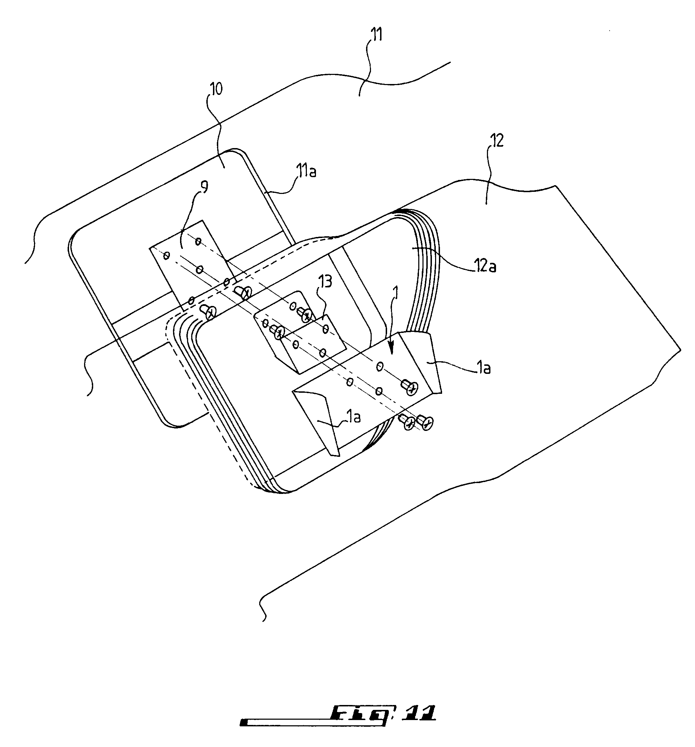

Comme représenté sur les figures 3 et 4, lors de l'engagement des pattes 4a et 4b dans les fentes 5 et 6, l'extrémité libre du ressort filiforme 7 est repoussée vers le haut par la patte supérieure 4a dans la direction de la flèche F2 sur la figure 4. En réaction, le ressort filiforme 7 repousse ensuite vers le bas la patte supérieure 4a qui s'engage dans le premier cran 5b de la fente 5, provoquant simultanément l'engagement de la patte inférieure 4b dans le cran unique 6b de la fente inférieure 6 (voir figures 5 et 6).

L'appareil 2 est alors dans une première position engagée dans le support 1, incliné par rapport à la verticale et maintenu de manière stable dans cette position par la force élastique du ressort 7. Comme visible sur la figure 5, dans cette position, on peut toujours ouvrir le volet 2a du lecteur 2 et introduire ou éjecter le porte-CD 3 de l'appareil. Dans cette position, le ressort 7 a repris sa position initiale à travers le trajet de la fente 5.

Si on poursuit le mouvement de l'appareil 2 vers le fond du support 1, on voit sur les figures 7 et 8 la patte supérieure 4a repoussant vers le haut le ressort filiforme 7 pour venir à la verticale du second cran 5c, provoquant simultanément le déplacement de la patte inférieure 4b à l'intérieur du cran unique 6b de la fente inférieure 6. En réaction, le ressort filiforme 7 repousse à nouveau la patte supérieure 4a vers le fond du cran 5c, comme représenté sur les figures 9 et 10, provoquant simultanément l'abaissement de la patte inférieure 4b vers le fond du cran 6b. Dans cette position, l'appareil 2 est sensiblement vertical et parallèle à la plaque de fond du support de fixation 1 et maintenu de manière stable dans les crans par le ressort 7.

Bien entendu, l'invention n'est pas limitée au nombre et à l'agencement particulier des crans des fentes supérieure et inférieure qui peuvent être modifiés sans sortir du cadre de l'invention.

Pour extraire l'appareil 2 de son support de fixation 1, il suffit d'effectuer les opérations précédentes en sens inverse, en soulevant d'abord l'appareil 2 vers le haut à l'encontre du ressort 7 puis de tirer vers l'extérieur ce dernier dans la direction de déplacement F1 précitée.

Bien entendu, lors de l'extraction ou de la mise en place de l'appareil 2 dans le support de fixation 1, il faudra respectivement débrancher ou rebrancher le lecteur sur son alimentation électrique reliée à la batterie, soit manuellement, soit automatiquement le cas échéant.

La forme et les dimensions du support de fixation 1 et de la deuxième plaque de support 9 pourront être adaptées à l'environnement où ils doivent être installés.

Dans un autre mode de réalisation, illustré sur les figures 12 et 13, la fente inférieure 6 dans les ailes 1a est remplacée par une portion de tôle 106 repliée vers le haut à partir du bord inférieur 1b du support 1, lesquelles deux portions de tôle 106 sont espacées l'une de l'autre et proches des ailes 1a, tout en étant légèrement en retrait de celles-ci. Les portions de tôle 106 peuvent être d'un seul tenant avec le support 1 ou des pièces séparées.

Les portions de tôle 106 définissent un logement pour recevoir la patte inférieure 104b de l'appareil 2, lequel logement a une forme générale en V, ouverte vers le haut en 106a pour permettre l'introduction/l'extraction de l'appareil, et ayant un cran unique 106b comme la fente 6.

Contrairement au mode de réalisation précédent, la patte inférieure 104b n'est pas ici en saillie des faces latérales 2c de l'appareil, mais sur le dessous 2d de ce dernier dans une position correspondant aux logements 106. On remarquera que l'encombrement latéral de l'agencement de l'invention est ici moindre car les pattes inférieures ne dépassent pas latéralement du support 1. Les pattes supérieure 104a et inférieure 104b peuvent faire partie d'une même pièce 104 ou constituer deux pièces distinctes.

Bien entendu, le fonctionnement de ce mode de réalisation est analogue au précédent.

## Revendications

1. Agencement d'un support de fixation (1) dans lequel est destiné à être installé un appareil (2), tel qu'un lecteur portatif audionumérique, **caractérisé en ce que** ledit support présente des fentes ou logements (5, 6 ; 106) servant de rampes de guidage pour des pattes (4a, 4b ; 104a, 104b) en saillie de l'appareil qui s'engagent dans lesdites fentes ou logements lors de l'installation de l'appareil dans le support, lesdites fentes ou logements présentant des crans (5b, 5c ; 6b ; 106b) correspondant aux différentes positions possibles pour l'appareil.

2. Agencement selon la revendication 1, **caractérisé en ce que** le support (1) comporte deux ailes latérales opposées (1a) entre lesquelles l'appareil (2) s'engage et dans lesquelles est prévue au moins une fente supérieure (5).

3. Agencement selon la revendication 1 ou 2, **caractérisé en ce que** chaque fente ou logement est prévu avec une partie (5a, 6a ; 106a) débouchant vers l'extérieur par laquelle les pattes s'engagent dans le support (1), pour que l'appareil (2) soit extractible.

4. Agencement selon l'une des revendications précédentes, **caractérisé en ce que** les crans sont agencés dans les fentes ou logements de façon que l'appareil puisse prendre sur le support une position stable inclinée vers l'avant et une position stable verticale au fond du support.

5. Agencement selon les revendications 2 et 4, **caractérisé en ce que** chaque aile (1a) du support comporte une fente supérieure (5) sensiblement linéaire ou en arc de cercle ayant deux crans (5b, 5c) en forme d'escalier descendant correspondant aux deux positions précitées.

6. Agencement selon l'une des revendications précédentes, **caractérisé en ce que** l'appareil (2) est muni sur ses parois (2c, 2d) d'une patte supérieure (4a ; 104a) et d'une patte inférieure (4b ; 104b) perpendiculaires au plan des fentes ou logements du support.

7. Agencement selon les revendications 5 et 6, **caractérisé en ce que** la patte supérieure (4a ; 104a) s'étend parallèlement à la direction générale (F1) de la fente supérieure (5) et la patte inférieure (4b ; 104b) s'étend perpendiculairement à cette direction.

8. Agencement selon la revendication 5, **caractérisé en ce que** chaque aile (1a) comporte en outre une fente inférieure (6) ayant un cran unique (6b) de dimension suffisante pour permettre le déplacement de la patte correspondante (4b) de l'appareil entre les deux positions précitées.

9. Agencement selon les revendications 7 et 8, **caractérisé en ce que** les pattes précitées sont prévues en saillie des parois latérales (2c) de l'appareil.

10. Agencement selon la revendication 5, **caractérisé en ce que** le support (1) comporte à sa base (1b) deux logements espacés (106) en forme générale de V définissant un cran unique (106b) de dimension suffisante pour permettre le déplacement de la patte correspondante (104b) de l'appareil entre les deux positions précitées.

11. Agencement selon les revendications 7 et 10, **caractérisé en ce que** les pattes supérieures sont prévues en saillie des parois latérales (2c) de l'appareil et les pattes inférieures (104b) sont prévues en saillie sous la base (2d) de l'appareil.

12. Agencement selon l'une des revendications précédentes, **caractérisé en ce que** le support (1) est muni d'un moyen (7) pour solliciter les pattes dans les différents crans suivant la position de l'appareil dans le support.

13. Agencement selon les revendications 5, 6 et 12, **caractérisé en ce que** ce moyen est un ressort (7) interposé sur le trajet de la patte supérieure (4a ; 104a) dans la fente supérieure (5).

14. Agencement selon la revendication 13, **caractérisé en ce que** le ressort est un ressort filiforme (7) qui est maintenu sur le support (1) par des pattes élastiques (8) découpées dans celui-ci.

15. Véhicule automobile équipé de l'agencement selon l'une des revendications précédentes dans le coffre du véhicule.

16. Véhicule selon la revendication 15, **caractérisé en ce que** l'agencement précité est installé au niveau d'un passage de roue arrière, dans une partie creuse (12a) du garnissage interne (12) du coffre.

17. Véhicule selon la revendication 16, **caractérisé en ce que** l'agencement comporte un deuxième support (9) fixé sur une tôle (10) du véhicule derrière le garnissage, le premier support (1) venant se fixer sur le second support en venant pincer le garnissage entre eux.

18. Véhicule selon la revendication 17, **caractérisé en ce que** l'agencement comporte en outre une entretoise (13) qui vient s'intercaler entre le garnissage (12) et le premier support (1).

## Patentansprüche

1. Anordnung einer Befestigungsstütze (1), in die ein Gerät (2) wie zum Beispiel ein tragbares Audiokassetten-Wiedergabegerät installiert werden soll, **dadurch gekennzeichnet, daß** besagte Stütze Schlitze oder Aufnahmen (5, 6; 106) aufweist, die als Führungsrampen für Klauen (4a, 4b; 104a, 104b) dienen, die aus dem Gerät hervorstehen, die bei der Installation des Gerätes in der Stütze in besagte Schlitze oder Aufnahmen eingreifen, wobei besagte Schlitze oder Aufnahmen Auszackungen (5b, 5c; 6b; 106b) aufweisen, die den verschiedenen möglichen Positionen für das Gerät entsprechen.

2. Anordnung gemäß Anspruch 1, **dadurch gekennzeichnet, daß** die Stützte (1) zwei laterale gegenüberliegende Flügel (1a) umfaßt, zwischen denen das Gerät (2) eingreift und in denen wenigstens ein oberer Schlitz (5) vorgesehen ist.

3. Anordnung gemäß Anspruch 1 oder 2, **dadurch gekennzeichnet, daß** jeder Schlitz oder jede Aufnahme mit einem Teil (5a, 6a; 106a) vorgesehen ist, der nach außen mündet und durch den die Klauen in die Stütze (1) eingreifen, damit das Gerät (2) herausnehmbar ist.

4. Anordnung gemäß einem der vorgenannten Ansprüche, **dadurch gekennzeichnet, daß** die Auszackungen derart in den Schlitzen oder Aufnahmen angeordnet sind, daß das Gerät auf der Stütze eine stabile, nach vorne gebeugte Position und eine stabile vertikale Position zur Rückseite der Stütze einnehmen kann.

5. Anordnung gemäß Anspruch 2 bis 4, **dadurch gekennzeichnet, daß** jeder Flügel (1a) der Stütze einen oberen (5) deutlich linearen oder kreisbogenförmigen Schlitz mit zwei Auszackungen (5b, 5c) in Form einer herabführenden Treppe aufweist, die den zwei vorgenannten Positionen entsprechen.

6. Anordnung gemäß einem der vorgenannten Ansprüche, **dadurch gekennzeichnet, daß** das Gerät (2) an seinen Seitenwänden (2c, 2d) mit einer oberen Klaue (4a; 104a) und mit einer unteren Klaue (4b; 104b) ausgerüstet ist, die senkrecht zur Ebene der Schlitze oder Aufnahmen der Stütze verlaufen.

7. Anordnung gemäß Anspruch 5 und 6, **dadurch gekennzeichnet, daß** der obere Teil (4a; 104a) sich parallel zur allgemeinen Richtung (F1) des oberen Schlitzes (5) erstreckt und die untere Klaue (4b; 104b) sich senkrecht zu dieser Richtung erstreckt.

8. Anordnung gemäß Anspruch 5, **dadurch gekennzeichnet, daß** jeder Flügel (1a) darüber hinaus einen unteren Schlitz (6) umfaßt, der eine einzige Auszackung (6b) mit ausreichender Abmessung hat, um die Verschiebung der entsprechenden Klaue (4b) des Geräts zwischen den zwei vorgenannten Positionen zu erlauben.

9. Anordnung gemäß Anspruch 7 bis 8, **dadurch gekennzeichnet, daß** die vorgenannten Klauen hervorstehend aus den lateralen Seitenwänden (2c) des Geräts vorgesehen sind.

10. Anordnung gemäß Anspruch 5, **dadurch gekennzeichnet, daß** die Stütze (1) an ihrer Basis (1b) zwei entfernte Aufnahmen (106) in allgemeiner V-Form umfaßt, die einen einzige Auszackung (106b) ausreichender Abmessung definiert, um die Verschiebung der entsprechenden Klaue (104b) des Geräts zwischen den zwei vorgenannten Positionen zu erlauben.

11. Anordnung gemäß Anspruch 7 und 10, **dadurch gekennzeichnet, daß** die oberen Klauen hervorstehend aus den lateralen Seitenwänden (2c) des Geräts vorgesehen sind und die unteren Klauen (104b) hervorstehend aus der Basis (2d) des Geräts vorgesehen sind.

12. Anordnung gemäß einem der vorgenannten Ansprüche, **dadurch gekennzeichnet, daß** die Stütze (1) mit einem Mittel (7) versehen ist, um die Klauen in den verschiedenen Auszackungen gemäß der Position des Gerätes in der Stütze anzusprechen.

13. Anordnung gemäß Anspruch 5, 6 und 12, **dadurch gekennzeichnet, daß** dieses Mittel eine Feder (7) ist, die auf dem Durchlauf der oberen Klaue (4a; 104a) im oberen Schlitz (5) zwischengeschaltet ist.

14. Anordnung gemäß Anspruch 13, **dadurch gekennzeichnet, daß** die Feder eine drahtförmige Feder (7) ist, die auf der Stütze (1) durch elastische, aus dieser ausgeschnittene Klauen (8) festgehalten wird.

15. Kraftfahrzeug, das mit der Anordnung gemäß einem der vorgenannten Ansprüche im Kofferraum des Fahrzeugs ausgestattet ist.

16. Kraftfahrzeug gemäß Anspruch 15, **dadurch gekennzeichnet, daß** die vorgenannten Anordnung auf der Höhe eines hinteren Radlaufs in einem hohlen Teil (12a) der Innenauskleidung (12) des Kofferraums installiert wird.

17. Kraftfahrzeug gemäß Anspruch 16, **dadurch gekennzeichnet, daß** die Anordnung eine zweite Stütze (9) umfaßt, die auf einem Blech (10) des Fahrzeugs hinter der Auskleidung befestigt wird, wobei die erste Stütze (1) auf der zweiten Stütze durch Festklemmen der Auskleidung zwischen ihnen befestigt wird.

18. Kraftfahrzeug gemäß Anspruch 17, **dadurch gekennzeichnet, daß** die Anordnung außerdem einen Steg (13) umfaßt, der zwischen die Auskleidung (12) und der ersten Stütze (1) zwischengeschoben wird.

## Claims

1. Fixing support arrangement (1) in which an apparatus (2), such as an audio-digital portable reader is provided to be mounted, **characterized in that** said support has slots or recesses (5, 6 ; 106) used as guiding ramps for tabs (4a, 4b ; 104a, 104b) protruding from the apparatus which are engaged in said slots or recesses upon mounting the apparatus in the support, said slots or recesses being provided with notches (5b, 5c ; 6b, 106b) corresponding to the possible different positions for the apparatus.

2. Arrangement according to claim 1, **characterized in that** the support (1) comprises two opposed side wings (1a) between which the apparatus (2) is engaged and in which at least one upper slot (5) is provided.

3. Arrangement according to claim 1 or 2, **characterized in that** each slot or recess is provided with an outwardly opening part (5a, 6a ; 106a) by means of which the tabs are engaged in the support (1), so that the apparatus (2) can be extracted.

4. Arrangement according to one of the preceding claims, **characterized in that** the notches are arranged in the slots or recesses so that the apparatus can take on the support a frontwardly bent stable position and a vertical stable position at the bottom of the support.

5. Arrangement according to claims 2 and 4, **characterized in that** each wing (1a) of the support comprises a substantially linear or arcuate upper slot (5) having two notches (5b, 5c) in the shape of a downward staircase corresponding to the two prementioned positions.

6. Arrangement according to one of the preceding claims, **characterized in that** the apparatus (2) has its walls (2c, 2d) provided with an upper tab (4a ; 104a) and a lower tab (4b ; 104b) perpendicular to the plane of the slots or recesses of the support.

7. Arrangement according to claims 5 and 6, **characterized in that** the upper tab (4a ; 104a) is extended parallelly to the general direction (F1) of the upper slot (5) and the lower tab (4b ; 104b) is extended perpendicularly to this direction.

8. Arrangement according to claim 5, **characterized in that** each wing (1a) further comprises a lower slot (6) having a single notch (6b) of a size which is sufficient for permitting the movement of the corresponding tab (4b) of the apparatus between the two prementioned positions.

9. Arrangement according to claims 7 and 8, **characterized in that** the prementioned tabs are provided to protrude from the side walls (2c) of the apparatus.

10. Arrangement according to claim 5, **characterized in that** the support (1) has its base (1b) which comprises to spaced recesses (106) of a general V shape defining a single notch (106b) of a size which is sufficient for permitting the movement of the corresponding tab (104b) of the apparatus between the two prementioned positions.

11. Arrangement according to claims 7 and 10, **characterized in that** the upper tabs are provided to protrude from the side walls (2c) of the apparatus and the lower tabs (104b) are provided to protrude under the base (2d) of the apparatus.

12. Arrangement according to one of the preceding claims, **characterized in that** the support (1) is provided with a means (7) for urging the tabs in the various notches according to position of the apparatus in the support.

13. Arrangement according to claims 5, 6, and 12, **characterized in that** this means is a spring (7) interposed on the path of the upper tab (4a ; 104a) in the upper slot (5).

14. Arrangement according to claim 13, **characterized in that** the spring is a wire-shaped spring (7) which is maintained on the support (1) by means of resilient tabs (8) which are cut therein.

15. Automobile vehicle fitted with the arrangement according to one of the preceding claims in the luggage boot (16) of the vehicle.

16. Vehicle according to claim 15, **characterized in that** the prementioned arrangement is mounted at a rear wheel passage, in an hollow part (12a) of the luggage boot inner lining (12).

17. Vehicle according to claim 16, **characterized in that** the arrangement comprises a second support (9) fixed on an iron sheet (10) of the vehicle behind the lining, the first support (1) coming to be fixed on the second support by squeezing the lining therebetween.

18. Vehicle according to claim 17, **characterized in that** the arrangement further comprises a distance member which is interposed between the lining (12) and the first support (1).
